# EUROPÄISCHE PATENTANMELDUNG

(11) **EP 0 999 193 A1**
(43) Veröffentlichungstag der Anmeldung: **10.05.2000**
(21) Anmeldenummer: 99121781.1
(22) Anmeldetag: 03.11.1999
(51) Int. Cl.: C04B 28/02, C04B 18/20, E04F 15/00

(54) **Zementäre Masse und daraus gebildetes Betonbauelement**

(30) Priorität: 03.11.1998 AT 181998
(71) Anmelder: Wustinger, Horst, 5204 Strasswalchen (AT)
(72) Erfinder: Wustinger, Horst, 5204 Strasswalchen (AT)
(74) Vertreter: Secklehner, Günter, Dr.

(57) **Zusammenfassung**

Die Erfindung beschreibt eine zementäre Masse (1) und ein daraus gebildetes Betonbauelement, insbesondere Estrich (2), bestehend aus Anteilen eines Bindemittels (9), z.B. Zement oder ähnlichen mineralischen Bindemitteln (9), und zumindest einem Zuschlagsstoff (6), z. B. Sand (7), Kies, Schotter (8) etc., und mit zumindest einem Füllstoff (6), z.B. Kunststoffgranulat (11). Das Kunststoffgranulat (11) weist ein mehrfaches Teilchenvolumen eines feinkörnigen Zuschlagsstoffes (6), z.B. Sand (7), auf und ein weiterer Zuschlagsstoff (6), z.B. Schotter (8), weist ein zum Teilchenvolumen des Kunststoffgranulats (11) etwa gleich großes Teilchenvolumen und gleiche oder ähnliche Teilchengröße auf.

## Beschreibung

Die Erfindung betrifft eine zementäre Masse wie im Oberbegriff des Anspruches 1 beschrieben, aber auch einen Estrich wie im Oberbegriff des Anspruches 10 beschrieben.

Aus der DE 90 07 268 U1 ist ein Baustoff, insbesondere Beton, betonähnlicher Stoff, Mörtel und dergleichen, bekannt, bei dem als Zuschlagsstoff neben den üblichen Zuschlagsstoffen wie Sand, Schotter etc. Kunststoff Verwendung findet und der ohne wesentlicher Minderung der einsatzspezifischen Festigkeit beliebig wählbar ist und als vollwertiger Ersatz für mineralische Zuschlagsstoffe dient. Verwendung findet der Kunststoff als Granulat aus zerkleinerten oder gemahlenen thermoplastischen und/oder duroplastischen Altkunststoffen mit einem Raumanteil bis zu 50 %, je nach Einsatzzweck des Baustoffes, bezogen auf die weiteren Zuschlagsstoffe und das durch das Bindemittel innerhalb des Baustoffes gebunden ist.

Aus der EP 0 669 292 A1 ist weiters die Verwendung von Schreddergut aus Altreifen, Altkunststoff etc. als Füllstoff für alle Arten von Betonfertigteilen und in Ortbeton bekannt, insbesondere auch als Dämmstoff in Beton.

Weiter sind zementäre Massen zur Bildung eines Estriches bestehend aus Zement, einem Sand-Schottergemisch und einem Wasseranteil bekannt, die für die Verarbeitung mehr oder weniger fließfähig sind. Nach dem Austrocknen bilden diese einen harten Baukörper und eignen sich insbesondere für Fußböden, die in weiterer Folge vielfach noch beschichtet oder mit unterschiedlichen Materialien belegt werden.

Nachteilig dabei ist die nach dem Aufbringen der fließfähigen Masse und dem Verarbeiten dem sog. schwabbeln auftretende Sedimentation, bei der die schwereren Zuschlagsstoffe, z.B. grobkörniger Sand und Schotter sich ablagern, die über relativ geringe Anteile von Bindemittelleimbrücken miteinander verbunden sind und an der Oberseite die feinkörnigen Zuschlagsstoffe unter einem hohen Anteil von Bindemittelleimbrücken vorhanden sind. Durch unterschiedliches Austrocknen und durch ein unterschiedliches Schwindverhalten, bedingt durch die unterschiedlichen Anteile an Bindemittelleimbrücken, die hauptsächlich das Schwinden verursachen, tritt ein sogenanntes Aufschüsseln auf, wodurch der Estrich eine Wannenform annimmt. Dies führt vielfach zu schweren Baumängeln sowie vielfach zu Rißbildungen oder überhaupt zu Bruch bei Belastungen und damit zu hohen Sanierungskosten.

Aufgabe der Erfindung ist es, eine zementäre Masse und einen daraus gefertigten Estrich zu schaffen, der an der Ober- und Unterseite möglichst gleichmäßig abtrocknet und bei dem das größte Schwinden in einer mittleren Zone stattfindet.

Diese Aufgabe der Erfindung wird durch die kennzeichnenden Merkmale des Anspruches 1 gelöst. Der überraschende Vorteil wird durch die Wirkung der Sedimentation, die beim Verarbeiten und in der ersten Phase der Abbindezeit vor sich geht, erreicht, da die grobkörnigen schwereren Zuschlagsstoffe in eine untere Schichte absinken und die grobkörnigeren leichteren Füllstoffe aufschwimmen während die feinkörnigen Zuschlagsstoffe eine Mittelschicht ausbilden, wo gleichzeitig durch den Feingehalt in dieser Schicht der größere Anteil der Bindemittelleimbrücken entsteht. An der Unterseite und an der Oberseite ist dagegen der Anteil der Bindemittelleimbrücken geringer, wodurch das hauptsächlich durch die Bindemittelleimbrücken beim Trocknen und Abbinden auftretende Schwinden in dieser Mittelschichte eintritt und damit ein Aufschüsseln wirkungsvoll vermieden wird. Die durch den Aufschwimmeffekt aufgrund des leichten Gewichtes sich in einer oberen Schicht ansammelnden Füllstoffe aus dem Kunststoffgranulat bewirken aber auch durch einen dampfbremsenden Effekt ein zu rasches und schädliches Abtrocknen und wirken damit ausgleichend für den Feuchtigkeitsgehalt und Trocknungsprozeß, wodurch neben dem Vorteil eines gleichmäßigen Schwindverhaltens über die gesamte Schichtdicke eines Estriches noch der Vorteil der Erzielung einer gleichmäßigen und insgesamt höheren Festigkeit kommt.

Möglich ist dabei auch eine vorteilhafte Weiterbildung wie im Anspruch 2 beschrieben, weil damit eine Feuchtigkeitsabfuhr an der Unterseite des Estriches erfolgen kann und damit ein gleichmäßiger Trocknungsprozeß von der Oberseite und der Unterseite in Richtung der Schichtmitte erfolgt, wodurch sich gleichmäßige Spannungsverhältnisse ausbilden und einseitige Spannungsbelastungen, die durch einseitiges Schwindverhalten auftreten können, vermieden werden und weiters die Armierungsschichte bereits nach kurzer Antrocknungszeit der noch nicht endgültig abgebundenen Masse eine höhere Belastbarkeit verleiht.

Von Vorteil ist aber auch eine Ausbildung nach Anspruch 3, wodurch der Einsatz handelsüblicher, kostengünstiger Armierungsmaterialien möglich ist, durch die eine hohe Festigkeit bei entsprechender Durchlässigkeit zur Regulierung des Trocknungs- und Abbindeprozesses erreicht wird.

Vorteilhaft ist aber auch eine Ausbildung nach Anspruch 4, weil damit der Einsatz eines aus Altstoffen wiedergewonnen Materials möglich ist.

Gemäß einer vorteilhaften Weiterbildung wie im Anspruch 5 beschrieben, wird ein gegenüber den üblichen Zuschlagsstoffen wie Sand, Kies, Schotter etc. spezifisch leichter und damit bei der Verarbeitung aufschwimmender Füllstoff erreicht, dessen Volumen und Raumform darüber hinaus je nach gewähltem Zerkleinerungsverfahren bedarfsweise ausgelegt werden kann. Neben dem positiven Effekt, dafür Recyclingmaterial einzusetzen und damit für eine Wiederverwertung in großem Ausmaß zu sorgen, wird nach der erfindungsgemäßen Anwendung in einem Betonbauelement, z.B. einem Estrich, eine oberflächennahe Schichte erreicht, die je nach gewählten Volumen und Raumform des Granulats einen geringeren Anteil an Bindemittelleimbrücken ausbildet, wodurch das Schwinden in diesem Bereich, das beim Trocknungsprozeß auftritt, reguliert werden kann, wobei weiters hinzukommt, daß der Trocknungsprozeß im Bereich dieser Schichte durch eine Diffusionsbremswirkung verlangsamt wird und damit über den gesamten Querschnitt des Estriches gesehen gleichmäßiger verläuft und damit Spannungsrisse vermieden werden. Ein weiterer sehr positiver Effekt ist durch die an der Oberfläche erreichbare höhere Schall- und Wärmedämmung, die durch den hohen Anteil an Kunststoffgranulat in der die Oberfläche ausbildenden Schichte erreicht wird.

Vorteilhaft ist auch eine Ausbildung wie in Anspruch 6 beschrieben, wodurch dekorative Oberflächen erreicht werden.

Möglich ist dabei auch eine Ausbildung wie im Anspruch 7 beschrieben, wodurch gezielte Oberflächenbeschaffenheiten und Eigenschaften der Oberflächen erreicht werden.

Von Vorteil ist auch eine Ausbildung nach Anspruch 8, womit das Raumgewicht der Füllstoffe an die entsprechende Rezeptur der Zuschlagstoffe anpaßbar ist.

Gemäß einer vorteilhaften Weiterbildung, wie im Anspruch 9 beschrieben, wird eine feste Einbindung der Füllstoffe in der zementären Masse erreicht, wie aber auch eine Abstimmung des Raumgewichtes damit erreicht wird, um den Schichtungsvorgang zu beeinflussen.

Eine vorteilhafte Anwendung für die zementäre Masse ist als Estrich gegeben wie in den Ansprüchen 10 bis 18 beschrieben, bei dem es entsprechend der Rezeptur und Beschaffenheit der Zuschlagstoffe und Füllstoffe zu dem gewünschten Sedimentationsverhalten kommt und sich letztendlich drei Schichten ausbilden, die allerdings miteinander in fester Bindung stehen. Die drei Schichten entstehen dabei durch das Verhältnis von Volumen bzw. Teilchengröße zu deren Gewicht, womit der grobkörnige schwere Zuschlagstoff wie Kies, Schotter, die untere Schichte ausbildet, in einer mittleren Schichte die feinkörnigen Zuschlagstoffe konzentriert enthalten sind und in der oberen Schichte der leichte Füllstoff durch den Aufschwimmeffekt enthalten ist. Dies bewirkt auch eine unterschiedliche Verteilung des Bindemittels und damit die Ausbildung der Bindemittelleimbrücken. Die besonders schwindende mittlere Schicht, bei der es sich um die feinste Schicht, also jene mit den meisten Bindemittelleimbrücken handelt und die auch das höchste Schwindausmaß beim Trocknungs- bzw. Abbindeprozeß durchläuft, kann nur in dem Ausmaß schwinden als es die grobkörnige die Kunststoffteile enthaltende obere Schichte und die grobkörnige die schweren Zuschlagstoffe enthaltende untere Schichte zulassen. Durch diese Verteilung stellt sich auch ein gleichmäßiger Trocknungs- und Abbindeprozeß von der Oberseite und Unterseite ein, der vorteilhaft noch beeinflußbar ist durch die Aufbringung des Estriches auf eine wasser- und dampfdurchlässige Zwischenlage, da diese den Belüftungseffekt steigert, wohingegen die Füllstoffe in der der Oberflächenschichte zugewandten Schichte der Diffusion entgegenwirkt und einen zu raschen Trocknungs- bzw. Abbindeprozeß von der Oberseite verhindern. Das Auftreten von Spannungsspitzen während des Trocknungs- und Abbindungsprozesses wird damit verhindert und entspricht der Aufbau in etwa einem Sandwichelement, dessen Festigkeit insgesamt größer ist als die einer monolitischen Struktur. Durch die Verlagerung der das höchste Schwindmaß aufweisenden feinkörnigen Schichte in einem Mittelbereich einer vorgegebenen Dicke eines Estriches wird ein sogenanntes Aufschüsseln wirkungsvoll unterbunden, wodurch auch die Belastbarkeit eines derartigen Estriches durch den Wegfall übermäßiger Zugspannungen an der Oberfläche wesentlich gesteigert wird. Die Festigkeit wird auch dadurch gesteigert, das durch die diffusionsbremsende Wirkung des Füllstoffes eine vollständige Hydrierung erreicht, weil die Bestandteile des Bindemittels mit dem Anmachwasser reagieren und dabei wasserhaltige Verbindungen (Calziumsilicat, -aluminat und -aluminatferrithydrate) bilden.

Weitere vorteilhafte Ausgestaltungen bestehen in der Ausbildung von Beschichtungen, welche die Endhärte der Oberfläche und deren optische Gestaltung ermöglichen. Eine besondere Oberflächengestaltung wird durch einen Terrazzoeffekt erreicht, der sich durch das in der oberen Schichte angesammelte Kunststoffgranulat ausbildet, der insbesondere dann erreicht wird, wenn die Oberfläche durch Schleifbehandlung oder chemische Behandlung noch nachträglich aufbereitet wird.

Dampfdichte Beschichtungen, die nach einem teilweise erfolgten Trocknungsprozeß aufbringbar sind, da der weitere Trocknungsprozeß ungestört über die Schichtdicke hindurch und der Unterseite erfolgen kann, ermöglichen das vorzeitige Aufbringen von an sich feuchtigkeitsempfindlichen Bodenbelägen, z.B. Holzparkett, Textilbelag etc., aber auch von dampfdichten Belägen wie PVC-Belägen und ähnlicher, bei denen Schäden durch Blasenbildungen auftreten würden und sparen damit den Baufortschritt hemmende Wartezeiten und damit beträchtliche Kosten.

Mit derartigen Beschichtungen ist auch eine entsprechende Oberflächenbeschaffenheit erzielbar, wie z.B. Rutschsicherheit, optische Gestaltung etc. Durch in einer obersten Schichte eingebrachte Fasern, Fäden, insbesondere in einer Wirrlage, wird eine zusätzliche Armierung in dieser kritischen Randzone erreicht und damit die Haltbarkeit wesentlich verlängert.

Zum besseren Verständnis wird diese anhand der in den nachfolgenden Figuren beschriebenen Ausführungsbeispielen näher erläutert.

Es zeigen:
- Fig. 1: einen Querschnitt durch einen aus der erfindungsgemäßen zementären Masse bestehenden Estrich;
- Fig. 2: eine andere Ausführung des erfindungsgemäßen Estriches.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

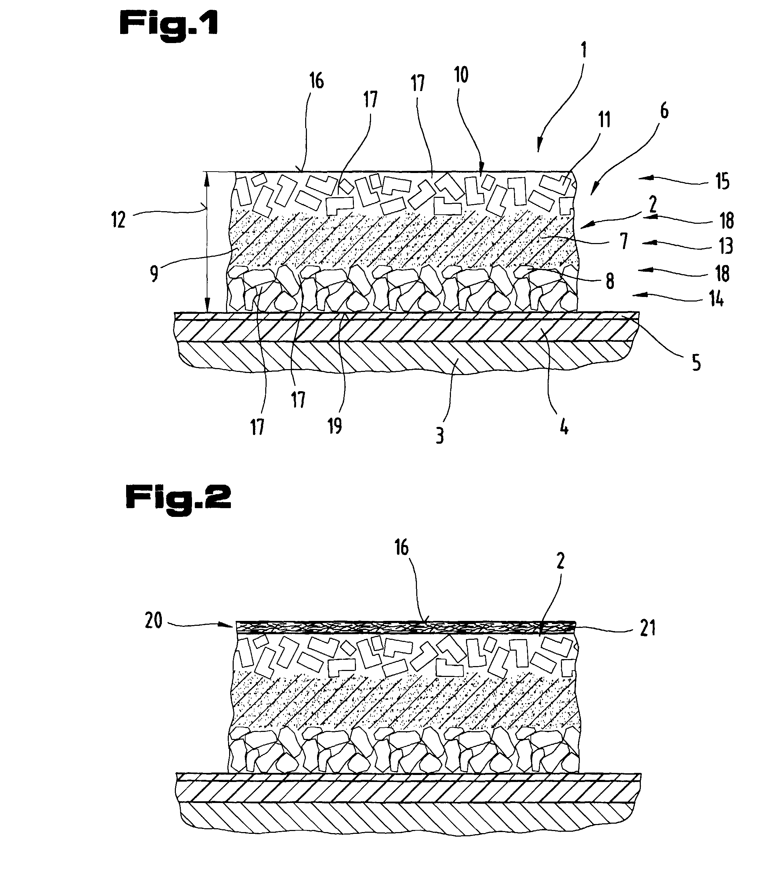

In der Fig. 1 ist ein aus einer zementären Masse 1 gebildetes Betonbauelement, z.B. ein Estrich 2, angeordnet und auf einem tragfähigen Unterboden 3, Geschoßdecke etc. gezeigt. Auf dem Unterboden 3 ist eine Isolierlage 4 als Wärme- und/oder Schalldämmschicht aus Materialien, wie sie aus dem Stand der Technik bekannt sind, angeordnet. Auf dieser ist eine Armierungslage 5 vorgesehen, die aus einem wasser- und luftdurchlässigen Gewebe, Gewirke, Vlies aus Textilien oder zellulosehaltigen Material besteht. Auf dieser Armierungslage 5 ist die zementäre Masse 1, z.B. der Estrich 2, aufgebracht. Dieser besteht aus einem Gemisch aus Zuschlagsstoffen 6, z.B. Sand 7, Schotter 8, abgestimmter Korngrößen sowie einem Bindemittel 9, z.B. Zement, sowie aus Füllstoffen 10, bevorzugt einem Kunststoffgranulat 11.

Diese Masse 1 wird in einem Mischvorgang unter Beigabe von Wasser zu einer erdfeuchten oder fließfähigen Masse aufbereitet und auf die Armierungslage 5 zur Bildung des Estriches 2 in einer gewünschten Dicke 12 nach bekannten Verfahren aufgebracht.

Die Konsistenz des Fließestriches ermöglicht nach dem Aufbringen und den üblichen Einebnungsarbeiten (Schwabbeln) die Sedimentation der Zuschlagsstoffe 6, Sand 7 und Schotter 8 aufgrund ihres Raumgewichtes in eine Mittelschichte 13 und eine Grundschichte 14 und ein Aufschwimmen des ein geringeres Raumgewicht aufweisenden Kunststoffgranulats 11 in eine Oberschichte 15, die auch die Oberfläche 16 ausbildet. Das Bindemittel 9 bildet zwischen den Zuschlagsstoffen 6 und Füllstoff 10 sogenannte Bindemittelleimbrücken 17 aus, die auch eine feste Bindung zwischen der Oberschichte 15, Mittelschichte 13 und Grundschichte 14 bewirken. Übergangszonen 18 zwischen der Grundschichte 14, Mittelschichte 13 und Oberschichte 15 sind unregelmäßig ausgebildet, wodurch ein Verzahnungseffekt entsteht, der dem Estrich 2 nach dem Trocknungs- bzw. Abbindeprozeß eine hohe Festigkeit gibt.

Die Sedimentation bewirkt, bedingt durch Korngröße und Raumgewicht der Zuschlagsstoffe 6, daß die Mittelschichte 13 vorwiegend aus dem Sand 7 mit dem Bindemittel 9 und die Grundschichte 14 aus dem grobkörnigen Schotter 8 mit dem Bindemittel 9 und sich auf diesen in Richtung der Oberfläche 16 der grobkörnige und ein geringeres Raumgewicht aufweisende Füllstoff 10 mit dem Bindemittel 9 ausbildet. Als Füllstoff 10 eignen sich insbesondere Schreddergut aus Altkunststoffen, insbesondere aus PVC aber auch aus gemischten Kunststoffen unterschiedlicher Zusammensetzung, unterschiedlicher Korngrößen und unterschiedlicher Farbe. Weiters geeignete Füllstoffe 10 sind, z.B. Glasschaum, Gummigranulat, Schaummineralsand bzw. mineralische, geschlossenporige Leichtstoffe.

Diese so erreichte Verteilung der Zuschlagsstoffe 6 und Füllstoffe 10 über die Dicke 12 des Estriches 2 gewährleistet einen gleichmäßigen Trocknungs- und Abbindeprozeß ausgehend von der Oberfläche 16 und einer Unterseite 19, da einerseits durch die groben Füllstoffanteile der Trocknungs- und Abbindeprozeß von der Oberfläche 16 ausgehend durch Isolierwirkung der Füllstoffe verlangsamt wird. Andererseits wird der Trocknungs- und Abbindeprozeß ausgehend von der Unterseite 19 durch die wasser- und luftdurchlässige Armierungslage 5 verbessert. In Verbindung mit den geringeren Anteilen an Bindemittelleimbrücken 17 in der mit grobkörnigem Füllstoff 10 versehenen Oberschichte 15 und grobkörnigem Zuschlagsstoff 6 in der Grundschichte 14 ergibt sich in diesen beim Trocknungs- bzw. Abbindeprozeß ein geringes Schwinden, sodaß dabei ein sogenanntes Schüsseln des Estriches 2 gänzlich unterbleibt, da das Schüsseln hauptsächlich dann entsteht, wenn durch die Sedimentation der feinkörnige Zuschlagsstoffe 6 mit einem hohen Anteil an Bindemittelleimbrücken 17 eine obere Lage ausbildet, die noch dazu einem raschen Trocknungs- bzw. Abbindeprozeß unterliegt.

Damit unterbleiben aber auch weitere negative Einwirkungen, die mit dem Schüsseln einhergehen wie z.B. Spannungsrisse an der Oberfläche 16 oder überhaupt Bruch des Estriches 2 bei einer ungleichmäßigen Belastung bevor der Trocknungs- bzw. Abbindeprozeß vollendet ist.

Die an der Unterseite 19 des Estriches 2 angeordnete Armierungslage 5 bewirkt zusätzlich zur verbesserten Abfuhr der Feuchtigkeit durch Ausbildung von Bindemittelleimbrücken 17, die in das Gewebe, Gewirke etc. eindringen, eine Armierung an der Unterseite 19 zur Aufnahme höherer Zugkräfte.

Selbstverständlich kann die Oberfläche 16 unterschiedlichen Folgebehandlungen ausgesetzt werden. Ein mechanischer Abtrag an der Oberfläche 16, wie er z.B. durch Schleifen vorgenommen werden kann, erzeugt einen Terrazzoeffekt infolge der in der Oberschichte 15 eingebetteten Füllstoff 10, z.B. dem Kunststoffgranulat 11, nachdem sich jedes Korn nach der Schleifbehandlung an der Oberfläche 16 abzeichnet. Besondere Effekte werden durch die Verwendung von unterschiedlich farbigem Kunststoffgranulat erreicht.

In der Fig. 2 ist eine weitere Ausbildung des erfindungsgemäßen Betonbauelements gezeigt, bei der der Estrich 2, wie bereits in der Fig. 1 beschrieben, dem Aufbau nach die Grundschichte 14, Mittelschichte 13 und Oberschichte 15 mit den entsprechenden Zuschlagsstoffen 6 und Füllstoff 10 und Bindemittel 9 aufweist. Nach diesem Beispiel ist eine Oberfläche 16 des so ausgebildeten Estriches 2 mit einer Deckschichte 20 versehen. Eine derartige Ausführung ermöglicht besonders wiederstandsfähige Estriche 2 herzustellen, insbesondere dann, wenn die Deckschichte 20 z.B. durch hochfeste Fasern 21 oder Fäden, z.B. Kohlfasern, Kheflarfasern, gebildet wird, die auf die Oberfläche des noch nicht abgebundenen Estriches aufgebracht z.B. auch eingewalzt werden und wenn diese bevorzugt in einer Wirrlage vorhanden sind. Derartige Ausbildungen ermöglichen auch ähnlich wie bei der Verwendung von Gummigranulat als Füllstoff 10 rutschsichere Estriche und auch solche, bei denen weitere Bodenbeläge zum Teil nicht erforderlich sind.

Der Ordnung halber sei abschließend darauf hingewiesen, daß zum besseren Verständnis des Aufbaus des erfindungsgemäßen Estriches dieser bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Masse
- 2: Estrich
- 3: Unterboden
- 4: Isolierlage
- 5: Armierungslage

- 6: Zuschlagsstoff
- 7: Sand
- 8: Schotter
- 9: Bindemittel
- 10: Füllstoff

- 11: Kunststoffgranulat
- 12: Dicke
- 13: Mittelschichte
- 14: Grundschichte
- 15: Oberschichte

- 16: Oberfläche
- 17: Bindemittelleimbrücke
- 18: Übergangszone
- 19: Unterseite
- 20: Deckschichte

- 21: Faser

## Patentansprüche

1. Zementäre Masse und daraus gebildetes Betonbauelement, insbesondere Estrich, bestehend aus Anteilen eines Bindemittels, z.B. Zement oder ähnlichen mineralischen Bindemitteln, und zumindest einem Zuschlagstoff, z. B. Sand, Kies, Schotter etc., und mit zumindest einem Füllstoff, z.B. Kunststoffgranulat, dadurch gekennzeichnet, daß das Kunststoffgranulat (11) ein mehrfaches Teilchenvolumen eines feinkörnigen Zuschlagsstoffes (6), z.B. Sand (7), aufweist und ein weiterer Zuschlagsstoff (6), z.B. Schotter (8), ein zum Teilchenvolumen des Kunststoffgranulats (11) etwa gleich großes Teilchenvolumen und gleiche oder ähnliche Teilchengröße aufweist.

2. Zementäre Masse nach Anspruch 1, dadurch gekennzeichnet, daß zur Auflagerung der Masse (1) auf einem Unterboden (3) oder einer Isolierlage (4) eine Armierungslage (5) insbesondere eine luft- oder wasserdampfdurchlässige Folie oder ein Gewebe, Gewirke etc., z.B. Geoflies, angeordnet ist, die zumindest bereichsweise von der Masse (1) durchsetzt und mit dieser verbunden ist, und der Füllstoff (10) bevorzugt in einem von der Armierungslage (5) abgewandten Dickenbereich der Masse (1) angeordnet ist.

3. Zementäre Masse nach Anspruch 1 oder 2, dadurch gekennzeichnet, daß die Armierungslage (5) aus Textilgewebe, Kunststoffgewebe, z.B. Geoflies etc., besteht.

4. Zementäre Masse nach einem oder mehreren der vorhergehenden Ansprüche, dadurch gekennzeichnet, daß die Armierungslage (5) aus zellulosehältigem Material, z.B. Papier, Pappe etc., gebildet ist.

5. Zementäre Masse nach einem oder mehreren der vorhergehenden Ansprüche, dadurch gekennzeichnet, daß der Füllstoff (10) aus geschlossenzelligem Kunststoffgranulat (11), bevorzugt PVC-Granulat, gebildet ist.

6. Zementäre Masse nach einem oder mehreren der vorhergehenden Ansprüche, dadurch gekennzeichnet, daß der Füllstoff (10) aus sortenunreinem und/oder verschiedenfärbigem Kunststoffgranulat (11) besteht.

7. Zementäre Masse nach einem oder mehreren der vorhergehenden Ansprüche, dadurch gekennzeichnet, daß der Füllstoff (10) aus einem eine unterschiedliche Raumform und eine unterschiedliche Raumausdehnung aufweisenden Granulatgemenge insbesondere Kunststoffgranulat (11), Gummigranulat etc. gebildet ist.

8. Zementäre Masse nach einem oder mehreren der vorhergehenden Ansprüche, dadurch gekennzeichnet, daß dem Kunststoffgranulat (11) ein Anteil eines mineralischen, geschlossenporigen Leichtstoffes, z. B. Schaumglas, Schaummineralsand etc., beigemengt ist.

9. Zementäre Masse nach einem oder mehreren der vorhergehenden Ansprüche, dadurch gekennzeichnet, daß dem Füllstoff (10) insbesondere dem Kunststoffgranulat (11) Kalksande beigemengt sind.

10. Estrich aus zementärer Masse nach einem oder mehreren der vorhergehenden Ansprüche, dadurch gekennzeichnet, daß der Estrich (2) zumindest zwei miteinander durch Bindemittel (9) fest verbundene Schichten aufweist, von denen in einer Schichte der durch Bindemittelleimbrücken (17) verbundene Füllstoff (10) und in der weiteren Schichte der durch Bindemittelleimbrücken (17) verbundene Zuschlagsstoff (6) angeordnet ist.

11. Estrich aus zementärer Masse nach einem oder mehreren der vorhergehenden Ansprüche, dadurch gekennzeichnet, daß der Estrich (2) zumindest drei Schichten aufweist.

12. Estrich aus zementärer Masse nach den beiden vorhergehenden Ansprüchen, dadurch gekennzeichnet, daß in einer unteren Grundschichte (14) großvolumige Zuschlagsstoffe (6), z.B. Kies, Schotter (8), verbunden über Bindemittelleimbrücken (17), und in einer Oberschichte (15) großvolumige Füllstoffe (10), verbunden über Bindemittelleimbrücken (17), angeordnet sind und zwischen den Schichten eine mit diesen durch Bindemittel verbundene Mittelschichte (13) ausgebildet ist.

13. Estrich aus zementärer Masse nach einem oder mehreren der vorhergehenden Ansprüche, dadurch gekennzeichnet, daß die Mittelschichte (13) aus feinkörnigem Zuschlagsstoff (6), z.B. Sand (7), mit einem hohen Anteil an Bindemittelleimbrücken (17) angeordnet ist.

14. Estrich aus zementärer Masse nach einem oder mehreren der vorhergehenden Ansprüche, dadurch gekennzeichnet, daß auf einer von der Armierungslage (5) abgewandten Oberfläche (16) eine Beschichtung, insbesondere eine den Trocknungs- und Abbindeprozeß regulierende dampfbremsende Deckschichte (20) aus Epoxy-Acrylat oder ähnlichem Material, angeordnet ist.

15. Estrich aus zementärer Masse nach einem oder mehreren der vorhergehenden Ansprüche, dadurch gekennzeichnet, daß die Oberfläche (16) mechanisch geglättet, insbesondere geschliffen, ausgebildet ist.

16. Estrich aus zementärer Masse nach einem oder mehreren der vorhergehenden Ansprüche, dadurch gekennzeichnet, daß die Oberfläche (16) chemisch behandelt, insbesondere durch Beschichtung mit geeigneten Harzen, ausgebildet ist.

17. Estrich aus zementärer Masse nach einem oder mehreren der vorhergehenden Ansprüche, dadurch gekennzeichnet, daß in einer die Oberfläche (16) ausbildenden Deckschichte (20) Fasern (21) oder Fäden, insbesondere Kohlefasern, Kheflarfäden etc., eingebettet angeordnet sind.

18. Estrich aus zementärer Masse nach einem oder mehreren der vorhergehenden Ansprüche, dadurch gekennzeichnet, daß die Fasern (21) oder Fäden in einer Wirrlage zueinander angeordnet sind.
